# FASCICULE DE BREVET EUROPEEN

(11) **EP 3 094 502 B1**
(45) Date de publication et mention de la délivrance du brevet: **29.05.2019**
(21) Numéro de dépôt: 14818911.1
(22) Date de dépôt: 09.12.2014
(51) Int. Cl.: B60C 11/03, B60C 11/13

(54) **BANDE DE ROULEMENT ÉVOLUTIVE POUR PNEU**
ERWEITERBARE REIFENLAUFFLÄCHE
EVOLVING TYRE TREAD

(30) Priorité: 13.12.2013 FR 1362636
(43) Date de publication de la demande: 23.11.2016
(73) Titulaire: Compagnie Générale des Etablissements Michelin, 63000 Clermont-Ferrand (FR)
(72) Inventeur: BARDIN, Damien, F-63040 Clermont-Ferrand Cedex 9 (FR); CAMBON, Stéphanie, F-63040 Clermont-Ferrand Cedex 9 (FR)
(74) Mandataire: Diernaz, Christian
(86) Numéro de dépôt international: PCT/EP2014/077090
(87) Numéro de publication internationale: WO 2015/086624

(56) Documents cités:
- EP-A2- 0 206 227
- WO-A1-2011/101495
- US-A- 2 322 505

## Description

### DOMAINE DE L'INVENTION

L'invention concerne les bandes de roulement pour pneus et plus particulièrement les dessins de sculpture de ces bandes ainsi que les pneus pourvus de telles bandes dont les performances en drainage de l'eau présente sur la chaussée par temps de pluie sont rendues pérennes, ces bandes de roulement présentant des performances améliorées en roulage.

### ÉTAT DE LA TECHNIQUE

De façon connue, des conditions de roulage par temps de pluie requièrent une élimination la plus rapide possible de l'eau entre la bande de roulement de chaque pneu et la chaussée afin d'assurer le contact de la bande de roulement avec la chaussée. L'eau qui n'est pas repoussée sur l'avant du pneu s'écoule en partie dans les rainures et les incisions formées dans la bande de roulement du pneu que ces rainures et incisions soient orientées dans la direction circonférentielle ou la direction transversale ou encore dans une direction oblique.

Par découpure, on entend toute cavité réalisée par moulage dans une bande de roulement, cette découpure s'étendant dans une direction principale et dans la profondeur de la bande de roulement.

Par rainure, on entend ici un creux s'ouvrant sur une surface de roulement destinée à être en contact avec la chaussée, ce creux ayant une largeur moyenne appropriée pour que les parois de matière qui le délimitent ne soient jamais en contact l'une avec l'autre dans les conditions normales d'usage du pneu.

Par incision, on entend ici une fente mince ayant une largeur moyenne faible et telle que, sous les conditions normales d'usage du pneu, les parois de matière la délimitant puissent venir, au moins partiellement, en contact l'une sur l'autre lors du passage dans la région de contact avec la chaussée.

Par épaisseur de matière à user (notée PMU), on entend l'épaisseur de bande de roulement pouvant être usée en roulage avant d'atteindre la limite légale d'usage d'une bande de roulement sur un pneu repérée notamment par des indicateurs d'usure formés dans les rainures.

Dans la présente description, on utilise les termes radial ou radialement pour indiquer une direction qui, lorsqu'elle est prise sur le pneu, est une direction perpendiculaire à l'axe de rotation du pneu tandis que, lorsqu'elle est prise sur une bande de roulement seule, elle correspond à la direction de l'épaisseur de ladite bande. Par ailleurs on utilise le terme circonférentiel pour indiquer une direction qui, correspond à une direction tangente à tout cercle centré sur l'axe de rotation du pneu. Cette même direction correspond à la direction longitudinale de la bande de roulement celle-ci étant formée à la manière d'une bande plane avant incorporation à la fabrication d'un pneu.

Quelle que soit la catégorie de pneu (c'est-à-dire que ce soit un pneu équipant un véhicule de tourisme ou un véhicule destiné à porter de lourdes charges), la bande de roulement doit présenter une performance en drainage de l'eau présente sur la route qui est toujours au-dessus d'une performance minimale dite performance de sécurité. En conséquence et compte tenu de l'usure progressive de la bande de roulement qui réduit progressivement les sections transversales des rainures donc la capacité de ces rainures à évacuer un volume de liquide, il est usuel de réaliser des rainures débouchant sur la surface de roulement à l'état neuf et se prolongeant dans l'épaisseur de la bande jusqu'à au moins un niveau qui correspond à une limite légale nécessitant le retrait de la bande.

La réalisation d'une pluralité de rainures sur une bande de roulement a pour inconvénient de réduire la quantité de matière de bande pour une largeur donnée de bande et par voie de conséquence d'affecter sensiblement les rigidités de la bande de roulement. Il en résulte que pour faire face aux sollicitations subies par la bande lors d'un roulage, la personne du métier doit prévoir de compenser ces diminutions de rigidité par tout moyen à sa disposition notamment en adaptant la structure interne du pneu ce qui, bien entendu, n'est pas sans incidence sur le prix de revient du pneu lui-même. Ces diminutions de rigidité peuvent en outre affecter la vitesse d'usure, la régularité de cette usure et certaines des performances attendues en roulage.

Par ailleurs on constate une augmentation de la résistance au roulement, ce qui se traduit par une augmentation sensible de la consommation des véhicules équipés de tels pneus, résultant d'une augmentation des pertes hystérétiques liées aux cycles de déformations de la matière caoutchoutique dont est formée la bande de roulement.

Il a été proposé dans le document WO 2011-039194 A1 de former dans une bande de roulement des rainures ayant la particularité de s'ouvrir de manière discontinue sur la surface de roulement de la bande à l'état neuf. Cette rainure peut être considérée comme étant une rainure ondulante dans l'épaisseur de la bande en s'ouvrant régulièrement sur la surface de roulement. Ce type de rainure ondulante peut être formé que ce soit dans la direction circonférentielle ou dans toute autre direction. Comme décrit dans cette publication, ce type de rainure est à l'état initial (correspondant à l'état neuf de la bande) continu ce qui permet d'assurer, en roulage sur chaussée revêtue d'eau, une capture de l'eau dans les parties de rainure s'ouvrant sur la surface de roulement lors du passage dans le contact avec la chaussée, l'eau ainsi captée étant drainée dans la rainure ondulante sous la surface de roulement. Le liquide ainsi capté est ensuite éjecté en dehors de la région de contact sous l'effet des forces centrifuges. Ce même document décrit la possibilité, à l'image des dessins de sculpture antérieurs, de réaliser des connexions entre au moins deux rainures ondulantes de ce type. Ce type de réalisation est très performant mais nécessite une technologie de moulage adaptée.

Le document WO2011/101495 décrit également une bande de roulement ayant des rainures ondulantes dans l'épaisseur de la bande de roulement et s'ouvrant de manière discontinue sur la surface de roulement de la bande à l'état neuf.

### BREF EXPOSE DE L'INVENTION

La présente invention s'attache à proposer une nouvelle géométrie de découpure sans avoir à changer de technologie de moulage, cette découpure assurant à la fois un excellent drainage de l'eau captée lors du passage dans le contact afin de réaliser un contact nécessaire avec la chaussée tout en limitant la diminution des rigidités de la bande de roulement afin notamment de réduire les pertes hystérétiques liées à la déformation des éléments de sculpture de la bande de roulement lors du passage dans le contact.

L'objet de l'invention est de proposer une bande de roulement pourvue de découpures permettant d'avoir une performance égale ou supérieure à la performance minimale de sécurité en drainage et cela quel que soit le niveau d'usure de cette bande tout en obtenant des performances en résistance au roulement répondant aux exigences actuelles du marché du pneu pour véhicules poids lourd.

À cet effet, l'invention a pour objet une bande de roulement pour pneu de véhicule poids lourd ayant une épaisseur totale PMU correspondant à l'épaisseur de matière à user en roulage. Cette épaisseur PMU est le plus souvent repérée par des indicateurs d'usure limite présents dans le fond des découpures. Cette bande de roulement a une surface de roulement destinée à venir en contact avec une chaussée lors du roulage d'un pneu pourvu de cette bande. Cette surface de roulement évolue avec l'usure à partir d'une surface de roulement à l'état neuf.

Cette bande de roulement comprend au moins une découpure s'ouvrant à l'état initial (bande de roulement neuve non usée) sur la surface de roulement à l'état neuf, cette découpure étant caractérisée en ce qu'elle comprend plusieurs parties liées entre elles, à savoir :
- une partie externe, c'est-à-dire s'ouvrant sur la surface de roulement à l'état neuf, cette partie externe formant une rainure ayant une profondeur moyenne Pe au plus égale à 90% de l'épaisseur PMU,
- cette partie externe ayant une largeur minimale Lm mesurée sur la surface de roulement à l'état neuf ;
- une partie interne formant le fond de la découpure, cette partie interne ayant la forme d'un canal de hauteur moyenne Hc, ce canal étant destiné à former une nouvelle rainure après une usure partielle de la bande de roulement au plus égale à 90% de l'épaisseur PMU.
- ce canal formant le fond de la découpure est continu dans la direction principale de la découpure et comprend au moins une partie étroite de largeur maximale Le et au moins une partie élargie de largeur maximale LE, chaque partie élargie du canal se prolongeant dans la rainure de la partie externe de la découpure par un élargissement de largeur maximale LM au moins égale à la largeur maximale LE de la partie élargie du canal.

Préférentiellement le canal formant la partie interne de la découpure a une largeur minimale Le qui est au moins égale à 20% de la largeur minimale Lm de la rainure de la partie externe mesurée sur la surface de roulement à l'état neuf.

Préférentiellement, la hauteur moyenne Hc du canal est au plus égale à 75% de l'épaisseur PMU.

Préférentiellement chaque partie élargie du canal a une largeur maximale LE au moins égale à 1.2 fois la largeur minimale Le du même canal et encore plus préférentiellement au moins égale à 1.3 fois la largeur minimale Le.

Préférentiellement la profondeur moyenne Pe de la partie externe est au plus égale à 50% de l'épaisseur PMU.

Grâce à cette structure de bande de roulement, on obtient un volume de creux approprié pour réaliser un drainage satisfaisant à l'état neuf et aussi quel que soit le niveau de l'usure tout en maîtrisant la diminution de rigidité de la bande de roulement à l'état neuf.

Pour faciliter les écoulements de liquide à l'intérieur de la découpure selon l'invention il est judicieux de faire en sorte que les raccordements entre les différentes parties de la découpure soient faits sans discontinuité brutale de géométrie. L'usage de rayon de raccordement appropriés est favorable.

Préférentiellement, le volume de chaque élargissement de la rainure est au moins égal au volume de chaque partie élargie du canal.

Afin de limiter encore plus la diminution de rigidité de la bande de roulement pourvue d'au moins une découpure selon l'invention, il est judicieux de prévoir que la rainure se ferme au moins partiellement lors du passage dans le contact en roulage. Par fermée au moins partiellement, il faut ici comprendre qu'à l'exception des élargissements, la rainure au moins dans sa région la plus à l'intérieur est fermée, ce qui revient à dire que cette rainure a ses parois en vis-à-vis qui se viennent en contact l'une contre l'autre. Grâce à la présence des élargissements le drainage d'eau présente sur la chaussée par temps de pluie reste possible vers l'intérieur du canal.

L'invention concerne également un pneu pourvu d'une bande de roulement définie selon l'invention, cette bande de roulement surmontant radialement à l'extérieur une enveloppe de pneu constituée d'une armature de carcasse et d'une armature de sommet. La bande de roulement de ce pneu est réalisée comme l'une des variantes décrites précédemment, certaines dimensions étant liées à la longueur moyenne de la surface de contact de la bande avec la chaussée dans les conditions nominales d'usage du pneu, ces conditions nominales d'usage étant définies dans les règlements de l'E.T.R.T.O. ou de la J.A.T.M.A. ou encore de la T.R.A.. Cela peut notamment être le cas pour les longueurs des élargissements de la rainure externe et des parties élargies du canal. En effet, il est judicieux qu'il y ait toujours au moins un élargissement dans le contact pour assurer un drainage satisfaisant de l'eau éventuellement présente sur la chaussée.

D'autres caractéristiques et avantages de l'invention ressortent de la description faite ci-après en référence aux dessins annexés qui montrent, à titre d'exemple non limitatif, une forme de réalisation de l'objet de l'invention.

### BREVE DESCRIPTION DES FIGURES

La figure 1 montre une partielle d'une découpure selon l'invention dans une bande de roulement ;
Les figures 2A et 2B montrent des coupes selon deux plans perpendiculaires au plan de la figure 1 et dont les traces respectives sont représentées par les lignes IIA-IIA et IIB-IIB.

### DESCRIPTION DES FIGURES

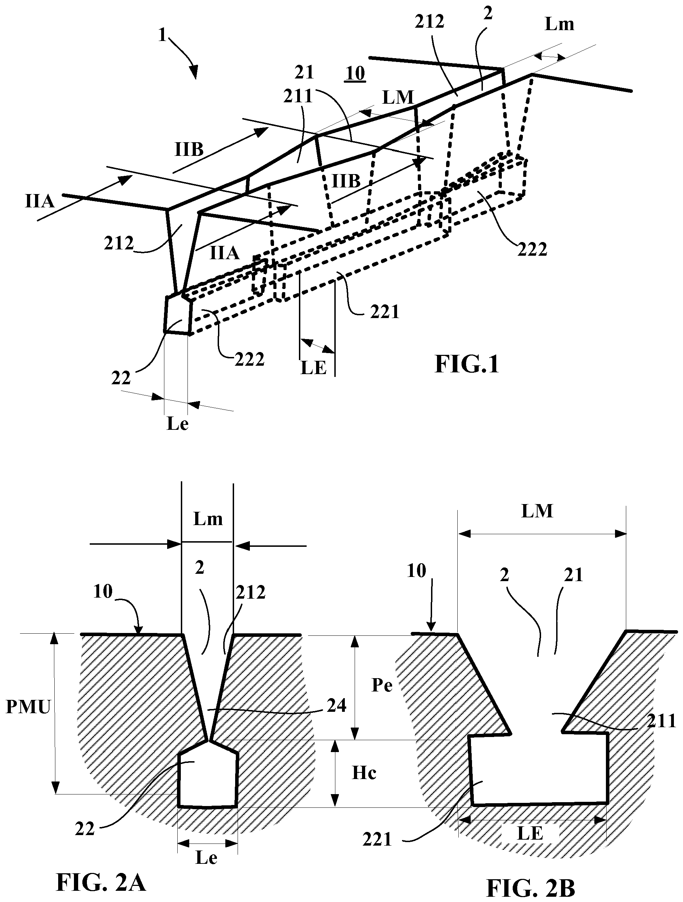

La figure 1 montre une partielle d'une découpure selon l'invention dans une bande de roulement destinée à équiper un pneu de véhicule poids lourd de dimension 315/70R22.5.

Cette bande de roulement 1 comprend à l'état neuf - représentée sur la figure 1 - une surface de roulement 10 destinée à venir en contact avec une chaussée lors du roulage.

Sur cette surface de roulement 10 s'ouvre une découpure 2 orientée selon une direction principale. Cette découpure 2 s'étend dans l'épaisseur de la bande de roulement jusqu'à une profondeur supérieure à l'épaisseur maximale PMU de matière à user en roulage. Cette épaisseur maximale PMU est égale dans le cas présenté à 14.5 mm. Sur cette figure on constate que la profondeur totale de la rainure est plus grande que l'épaisseur de matière à user PMU afin de maintenir de bonnes performances, notamment de drainage de l'eau par temps de pluie, jusqu'à une usure correspondant à cette profondeur.

La découpure 2 comprend sur sa partie externe c'est-à-dire radialement vers l'extérieur une rainure 21 à section variable le long de son orientation principale. Cette rainure 21 a une profondeur égale à 10.4 mm soit 72% l'épaisseur maximale PMU de matière à user en roulage.

Cette rainure 21 est prolongée radialement à l'intérieur par un canal 22 continu dans la direction principale de la découpure et ayant une hauteur Hc égale à 4.1 mm. Ce canal 22 comprend une pluralité de parties élargies 221 de largeur LE égale à 7.1 mm et une pluralité de parties étroites 222 de largeur Le égale à 4.1 mm, les parties élargies et les parties étroites du canal étant disposées en alternance dans la direction principale de la découpure.

Chaque partie élargie 221 du canal 22 se prolonge radialement à l'extérieur de la bande de roulement par un élargissement 211 constituant une partie de la rainure 21. La largeur maximale LM mesurée sur la surface de roulement 10 à l'état neuf de cet élargissement 211 est ici égale à 7.1 mm. Entre deux élargissements 211 de rainure on trouve des parties de rainure 212 de largeur moyenne Lm sur la surface de roulement à l'état neuf égale à 5 mm.

En outre dans ces parties de rainure plus étroites 212 on note que le fond de la rainure est tel que les parois délimitant ladite incision sont inclinées de manière appropriée l'une par rapport à l'autre de façon que lors du passage dans le contact elles puissent viennent localement au moins en appui l'une contre l'autre (le fond se prolonge radialement vers l'intérieur par le canal 22). Grâce à cet appui il est possible de limiter la perte de rigidité d'une bande de roulement pourvue d'au moins une découpure tout en assurant un bon drainage des liquides présents sur la chaussée.

Grâce à cette conception de découpure, il est possible à l'état neuf de satisfaire le cahier des charges d'un pneu de poids lourd en matière de performances requises en roulage sur chaussée revêtue d'eau.

Les figures 2A et 2B montrent des coupes selon deux plans perpendiculaires au plan de la figure 1 et dont les traces respectives sont représentées par les lignes IIA-IIA et IIB-IIB. Ces coupes montrent la découpure dans une configuration non sollicitée, c'est-à-dire dans un étant non chargé. On comprend notamment avec ces deux figures que la partie externe de la rainure peut se fermer lors du passage dans le contact compte tenu de la faible distance entre les parois en vis-à-vis tandis que dans les régions élargies il y a - même dans le passage dans le contact - une ouverture entre la partie externe et la partie interne formant un canal.

Ce qui a été montré et décrit avec une découpure suivant une seule orientation peut s'appliquer aisément au cas d'une découpure orientée circonférentiellement ou dans toute direction oblique sur un pneu. De même cette découpure peut suivre une direction générale ondulante ou bien zigzagante.

L'invention n'est pas limitée aux exemples présentés et diverses modifications peuvent y être apportés sans sortir de son cadre tel que défini par les revendications.

## Revendications

1. Bande de roulement (1) pour pneu de véhicule poids lourd ayant une épaisseur totale PMU correspondant à l'épaisseur de matière à user en roulage, cette bande de roulement ayant une surface de roulement (10) destinée à venir en contact avec une chaussée lors du roulage d'un pneu pourvu de cette bande, cette bande de roulement comprenant au moins une découpure (2) s'ouvrant à l'état initial sur la surface de roulement (10) à l'état neuf, cette découpure (2) comprenant plusieurs parties liées entre elles, à savoir :
- une partie externe, c'est-à-dire s'ouvrant sur la surface de roulement (10) à l'état neuf, cette partie externe formant une rainure (21) ayant une profondeur moyenne Pe au plus égale à 90% de l'épaisseur PMU,
- cette partie externe ayant une largeur minimale Lm mesurée sur la surface de roulement à l'état neuf ;
- une partie interne formant le fond de la découpure (2), cette partie interne ayant la forme d'un canal (22) de hauteur moyenne Hc, ce canal (22) étant destiné à former une nouvelle rainure après une usure partielle de la bande de roulement,
cette bande de roulement étant **caractérisée en ce que** le canal (22) formant le fond de la découpure (2) est continu dans la direction principale de la découpure et comprend au moins une partie étroite (222) de largeur maximale Le et au moins une partie élargie (221) de largeur maximale LE, chaque partie élargie (221) du canal (22) se prolongeant dans la rainure (21) de la partie externe de la découpure (2) par un élargissement (211) de la rainure (21), cet élargissement (211) ayant une largeur maximale LM, mesurée sur la surface de roulement à l'état neuf, au moins égale à la largeur maximale LE de la partie élargie (221) du canal.

2. Bande de roulement selon la revendication 1 **caractérisée en ce que** le canal formant la partie interne de la découpure a une largeur minimale Le qui est au moins égale à 20% de la largeur minimale Lm de la rainure de la partie externe mesurée sur la surface de roulement à l'état neuf.

3. Bande de roulement selon la revendication 1 ou la revendication 2 **caractérisée en ce que** la hauteur moyenne Hc du canal est au plus égale à 75% de l'épaisseur PMU.

4. Bande de roulement selon l'une des revendications 1 à 3 **caractérisée en ce que** chaque partie élargie du canal a une largeur maximale LE au moins égale à 1.2 fois la largeur minimale Le du même canal et encore plus préférentiellement au moins égale à 1.3 fois la largeur minimale Le.

5. Pneu pourvu d'une bande de roulement selon l'une quelconque des revendications 1 à 4, ce pneu étant **caractérisé en ce qu'**il est destiné à équiper un véhicule poids lourd.

## Patentansprüche

1. Lauffläche (1) für Reifen eines Schwerlastfahrzeugs, welche eine Gesamtdicke PMU aufweist, welche der im Einsatz zu verschleißenden Materialdicke entspricht, wobei diese Lauffläche eine Laufoberfläche (10) aufweist, welche dafür vorgesehen ist, beim Einsatz eines mit dieser Fläche versehenen Reifens mit einer Fahrbahn in Kontakt zu kommen, wobei diese Lauffläche mindestens einen Ausschnitt (2) aufweist, welcher im anfänglichen Zustand auf der Laufoberfläche (10) im neuen Zustand mündet, wobei dieser Ausschnitt (2) mehrere miteinander verbundene Teile aufweist, nämlich:
- einen äußeren Teil, das heißt welcher in der Laufoberfläche (10) im neuen Zustand mündet, wobei dieser äußere Teil eine Rille (21) bildet, welche eine mittlere Tiefe Pe von höchstens gleich 90% der Dicke PMU aufweist,
- wobei dieser äußere Teil eine minimale, auf der Laufoberfläche im neuen Zustand gemessene Breite Lm aufweist;
- einen inneren Teil, welcher den Boden des Ausschnitts (2) bildet, wobei der innere Teil die Form eines Kanals (22) mit einer mittleren Höhe Hc aufweist, wobei dieser Kanal (22) dafür vorgesehen ist, eine neue Rille nach einem teilweisen Verschleiß der Lauffläche zu bilden,
wobei diese Lauffläche **dadurch gekennzeichnet ist, dass** der den Boden des Ausschnitts (2) bildende Kanal (22) in der Hauptrichtung des Ausschnitts fortlaufend ist und mindestens einen schmalen Teil (222) mit maximaler Breite Le und mindestens einen erweiterten Teil (221) mit maximaler Breite LE aufweist, wobei sich jeder erweiterte Teil (221) des Kanals (22) in der Rille (21) des äußeren Teils des Ausschnitts (2) durch eine Erweiterung (211) der Rille (21) ausdehnt, wobei diese Erweiterung (211) eine maximale, auf der Laufoberfläche im neuen Zustand gemessene Breite LM aufweist, welche höchstens gleich der maximalen Breite LE des erweiterten Teils (221) des Kanals ist.

2. Lauffläche nach Anspruch 1, **dadurch gekennzeichnet, dass** der den inneren Teil des Ausschnitts bildende Kanal eine minimale Breite Le aufweist, welche höchstens gleich 20% der maximalen, auf der Laufoberfläche im neuen Zustand gemessenen Breite Lm der Rille des äußeren Teils ist.

3. Lauffläche nach Anspruch 1 oder Anspruch 2, **dadurch gekennzeichnet, dass** die mittlere Höhe Hc des Kanals höchstens gleich 75% der Dicke PMU ist.

4. Lauffläche nach einem der Ansprüche 1 bis 3, **dadurch gekennzeichnet, dass** jeder erweiterte Teil des Kanals eine maximale Breite LE von höchstens gleich 1,2 Mal die maximale Breite Le des gleichen Kanals und ganz besonders von höchstens gleich 1,3 Mal die minimale Breite Le aufweist.

5. Reifen, welcher mit einer Lauffläche nach einem der Ansprüche 1 bis 4 versehen ist, wobei dieser Reifen **dadurch gekennzeichnet ist, dass** er dafür vorgesehen ist, ein Schwerlastfahrzeug auszurüsten.

## Claims

1. Tread (1) for a heavy vehicle tyre having a total thickness PMU corresponding to the thickness of material to be worn away during running, this tread having a tread surface (10) intended to come into contact with a roadway when a tyre provided with this tread is being driven on, this tread comprising at least one cut (2) opening in the initial condition onto the tread surface (10) when new, this cut (2) comprising several parts joined together and namely:
- an external part, which means to say one opening onto the tread surface (10) when new, this external part forming a groove (21) having a mean depth Pe at most equal to 90% of the thickness PMU,
- this external part having a minimum width Lm measured on the tread surface when new;
- an internal part forming the bottom of the cut (2), this internal part having the shape of a channel (22) of mean height Hc, this channel (22) being intended to form a new groove when the tread becomes part-worn;
this tread being **characterized in that** the channel (22) forming the bottom of the cut (2) is continuous in the main direction of the cut and comprises at least one narrow part (222) of maximum width Le and at least one wider part (221) of maximum width LE, each widened part (221) of the channel (22) extending into the groove (21) of the external part of the cut (2) in the form of a widening (211) of the groove (21), this widening (211) having a maximum width LM, measured on the tread surface when new, at least equal to the maximum width LE of the widened part (221) of the channel.

2. Tread according to Claim 1, **characterized in that** the channel forming the internal part of the cut has a minimum width Le which is at least equal to 20% of the minimum width Lm of the groove of the external part measured on the tread surface when new.

3. Tread according to Claim 1 or Claim 2, **characterized in that** the mean height Hc of the channel is at most equal to 75% of the thickness PMU.

4. Tread according to one of Claims 1 to 3, **characterized in that** each widened part of the channel has a maximum width LE at least equal to 1.2 times the minimum width Le of the same channel and, more preferably still, at least equal to 1.3 times the minimum width Le.

5. Tyre provided with a tread according to any one of Claims 1 to 4, this tyre being **characterized in that** it is intended to be fitted to a heavy vehicle.
